(19) **Europäisches Patentamt** / **European Patent Office** / **Office européen des brevets**

(11) **EP 4 208 377 B1**

(12) **EUROPEAN PATENT SPECIFICATION**

(45) Date of publication and mention
of the grant of the patent:
**27.05.2026   Bulletin 2026/22**

(21) Application number: **21758766.6**

(22) Date of filing: **04.08.2021**

(51) International Patent Classification (IPC):
**B60W 30/095** *(2012.01)*      **B60W 50/14** *(2020.01)*
**B60W 50/00** *(2006.01)*

(52) Cooperative Patent Classification (CPC):
**B60W 30/0956; B60W 50/0097; B60W 50/14;**
B60W 2554/40; B60W 2554/802; B60W 2554/804

(86) International application number:
**PCT/IB2021/057132**

(87) International publication number:
**WO 2022/049428 (10.03.2022 Gazette 2022/10)**

(54) **METHOD AND ARRANGEMENT TO TIMELY TRIGGER AUTOMATIC EMERGENCY BRAKING OPERATION AND TO CONTROL THE LONGITUDINAL MOVEMENT OF A VEHICLE**

VERFAHREN UND ANORDNUNG ZUR RECHTZEITIGEN AUSLÖSUNG EINES AUTOMATISCHEN NOTBREMSVORGANGS UND ZUR STEUERUNG DER LÄNGSBEWEGUNG EINES FAHRZEUGS

PROCÉDÉ ET AGENCEMENT POUR DÉCLENCHER EN TEMPS OPPORTUN UNE OPÉRATION DE FREINAGE D'URGENCE AUTOMATIQUE ET POUR COMMANDER LE MOUVEMENT LONGITUDINAL D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.09.2020   HU 2000291**

(43) Date of publication of application:
**12.07.2023   Bulletin 2023/28**

(73) Proprietor: **Vie Technology (Europe) Kft.**
**1117 Budapest (HU)**

(72) Inventors:
• **RÓZSA, Tamás**
**1173 Budapest (HU)**

• **FUCHS, András**
**2071 Páty (HU)**
• **RAPP, Tamás**
**1117 Budapest (HU)**

(74) Representative: **Pintz, György**
**Pintz & Partners LLC**
**Pf. 245**
**1444 Budapest (HU)**

(56) References cited:
**CN-B- 107 139 923      US-A1- 2011 190 972
US-A1- 2018 118 146**

**Description**

The subject of the invention is a procedure and arrangement for timely initiating the automatic emergency braking process of a vehicle, as well as the preceding warning and for controlling the longitudinal movement of the vehicle.

**In** both passenger car and commercial vehicle industries, advanced driver assistance systems (ADAS) are applied more and more commonly. Many of such systems can be found in the latest vehicles; such as stability support systems (ESP - Electronic Stability Program, ESC - Electronic Stability Control), cruise control (CC - Cruise Control), adaptive cruise control (ACC - Adaptive Cruise Control), collision warning and automatic emergency braking systems (FCW - Forward Collision Warning, AEBS - Advanced Emergency Braking System), lane departure warning systems (LDWS - Lane Departure Warning System) etc. Systems such as the AEBS carry out multi-level intervention. The first stages issue warnings to the driver so that the driver becomes aware of the perceived dangerous situation. The warning may be acoustic and/or visual and/or haptic. When an AEBS is used, the warning phase is followed by emergency braking. An FCW system does not perform brake intervention in and of itself. It is prohibited to initiate emergency braking during the warning phase, but the brake system may be used with moderate deceleration.

**In** terms of their operation, several of the above-mentioned systems require that the vehicle be equipped with some kind of sensor that is capable of sensing the environment, so that nearby vehicles, pedestrians, lane paintings etc. can be detected. During their operation, these systems usually use simple kinematic relationships to predict the movement of their own vehicle and nearby vehicles (including, among others, pedestrians and cyclists as well). **In** the simplest scenario, such prediction assumes, for example, constant speeds, and, on this basis, it predicts the movements and positions of vehicles and/or other transport participants. This assumption may result in an intervention that is too early, too late, too weak, or possibly too strong compared to what is expected, if the vehicle / participant in question keeps changing its speed by slowing down or accelerating. Early or too powerful intervention increases the number of false alarms and/or brakes/accelerations (while also increasing dissatisfaction with the system), while delayed or too weak intervention can, in extreme cases, even lead to collisions in cases where it could have been avoided on the basis of available information. Since, under real conditions, speed is not constant as assumed, the performance of the system can be improved if the algorithm takes into account the acceleration values of vehicles/participants as measured or calculated by the environmental sensors; thus the system may be able to take into account changes in speed when calculating expected movements.

Such solutions, which can be considered as closest, are described in documents Nos. US7425043 B2 and EP 1539523 B1. The solution described in these documents provides a supplementary function to avoid a collision with the rear of the vehicle in front or to mitigate the impact of a collision. The driver is warned and an automatic emergency braking process is initiated if and when a predefined condition so requires, but only after a predetermined warning period has elapsed, to avoid the vehicle colliding with the vehicle in front of it.

US6470986 B2 performs emergency braking as quickly as possible when the distance between the vehicles is shortened to a critical value. This emergency braking ensures by physical means that the vehicle decelerates quickly, thus helping to avoid a rear-end collision.

The solution described in document No. US2009/0210114 A1 continuously evaluates the vehicle's environment-related data and initiates independent emergency braking in the event of an unavoidable collision. Emergency braking must be maintained until a predetermined event occurs. A predetermined event may be the lapse of a predetermined period until a collision or the actual detection of the collision.

The solution described in document No. DE10102772 A1 comprises a permanent memory unit in which a data record containing the actual braking and steering commands is stored in the event of certain accidents, and with means by which an additional setting value can be used to initiate emergency braking or steering operations. The device initiates automatic braking or steering when the accident calculation algorithm reaches the set threshold.

The solution described in document No. US 2009/0024282 A1 discloses a preventive protection system in vehicles fitted with a vehicle-to-vehicle distance detection system and safety devices to mitigate the impact of a collision. Driving state data is collected using a driving state sensor system, and such data is monitored for critical conditions of vehicle movement and dynamics during the evaluation stages.

The most efficient ones of the known solutions are those that also take into account the acceleration of the vehicles, in addition to the current distance and speed values of the vehicle and the vehicle in front of it. Systems that do not use acceleration information have not been able so far to efficiently handle accelerating objects.

Further examples using predictive models in controlling the longitudinal dynamics of a vehicle are given in documents CN 107139923 B and US 2011190972 A1.

The purpose of the invention is to overcome the shortcomings of the known solutions and to provide a solution which is able to provide effective driving support and to avoid a linear longitudinal collision in a simple manner, for example by using radar and/or a camera and/or a laser or lidar, and without measuring acceleration values. Our goal was to develop an advanced driver assistance system that can respond to surrounding objects in a timely manner and with an appropriate level of comfort and safety, where the "response" can be a warning to the driver (e.g. visual and/or audible warning), a change to the system's behaviour, or continuous adaptation when closed loop control is used. In line with this goal, the driver assistance system described here may serve both comfort and safety purposes.

The inventive step is based on the recognition that a solution, which is more advantageous than the previous ones, may be created by implementing taking the steps according to claim 1. Commonly used and economic environment monitoring tools (such as radars, cameras, lidars) are not capable of directly detecting acceleration, and, consequently, the known solutions estimate the time derivative of measured (or calculated) speed if the object's speed change is taken into consideration. However, estimating the value of the derivative may cause problems: if the estimation is too fast, the calculated acceleration value can become heavily loaded with noise (especially when using sensors that already derive speed); if the estimation is too slow, it can also cause an unwanted delay in the intervention. We have recognized that the problems described can be alleviated or even eliminated if the acceleration of the object is not calculated directly. With this solution, the efficiency of both new and existing systems can be increased. Without measuring specific acceleration data, a hypothetical acceleration of the vehicle in front is calculated. To initiate automatic emergency braking, this hypothetical acceleration is defined as a critical acceleration value, for which the emergency braking and its preceding driver warning would have to be triggered, based on the measured further kinematic quantities (distance, own speed and speed of the vehicle in front, own acceleration). Using dynamic tracking with memory, hypothetical distance and speed values are calculated based on the hypothetical acceleration values and other actually measured kinematic quantities (distance, own and forward vehicle speed, own vehicle acceleration), and they are compared to the corresponding current (currently measured) distance and speed values. If the values are appropriate, the system will not intervene. However, if the vehicle in front decelerates significantly, or at least does not accelerate as much as required by the situation, so that the hypothetical distance and speed values deviate significantly from the measured values, a warning signal is given or action is taken as necessary.

The same principles can be applied to determine the continuous vehicle control intervention signal (where the intervention signal is, for example, the acceleration command of the vehicle itself): the hypothetical acceleration of the vehicle in front is calculated so that it corresponds to the ideal acceleration value at which, calculated on the basis of other kinematic quantities (distance, own speed and speed of the vehicle speed in front, acceleration of own vehicle), the desired intervention should not be changed. With the help of this hypothetical acceleration value, hypothetical distance and speed values can be calculated as described above, and the vehicle control intervention signal can be increased or reduced as necessary on the basis of comparing these hypothetical values to the values actually measured.

According to the invention, not only another vehicle but also any "object" (pedestrian, cyclist etc.) can move or stand in front of the driver's own vehicle.

The most general embodiment of the invention is described in claim 1 and the independent claim concerning the arrangement.

In line with the goal set, the procedure according to the invention is for timely initiating the automatic emergency braking process of the vehicle and for controlling its longitudinal movement, in order to avoid a collision with the object moving in front and/or continuously following the object moving in front, using radar and/or camera and/or lidar, and without using object acceleration data directly, as part of which instantaneous kinematic values are measured and pre-set or adaptively determined relative speed and distance are to be reached or maintained, and if those are predicted to fail, the driver is warned and then an emergency braking process is initiated or interventions are carried out as necessary for following the object. A distinctive feature of the invention is that the current instantaneous kinematic values are used in conjunction with the previously observed kinematic values, as follows:

- the previously observed kinematic values are used together with the desired acceleration of the vehicle to determine hypothetical kinematic values,

- the hypothetical values are refer to the current processing cycle, while the previously observed kinematic values refer to at least one previous processing time cycle,

- the hypothetical values are determined to correspond to the idealized situation that would have developed taking into account the previously observed kinematic values and the desired acceleration of the vehicle itself,

- the actual warning and/or acceleration command to be executed by the own vehicle is determined based on the relationship between the hypothetical values and the actual, current instantaneous values.

The connection arrangement according to the invention is for timely initiating the automatic emergency braking process of a vehicle and for controlling longitudinal movement, and it includes a power supply, environment sensors, executive components, a warning and operating device, a control system, interfaces, and a static manoeuvre predictor. A distinctive feature of the arrangement according to the invention is that it includes a dynamic tracker for ideal states, and the dynamic tracker for ideal states calculates hypothetical values through the static manoeuvre predictor, and the control system uses intervention signals from the control protocol unit and is connected to operating and warning devices and the executive component in a manner that is suitable for transferring signals.

The invention is presented below using drawings of possible implementation forms. On the attached drawings,

Figure 1 shows a sketch of the theoretical arrangement of the system,
Figure 2 the flowchart of an intervention as an example,
Figure 3 the flowchart of an intervention as another example,
Figures 4a, 4b, and 4c show the diagram of a manoeuvre as an example,
Figures 5a, 5b, and 5c show the diagram of a manoeuvre as another example.

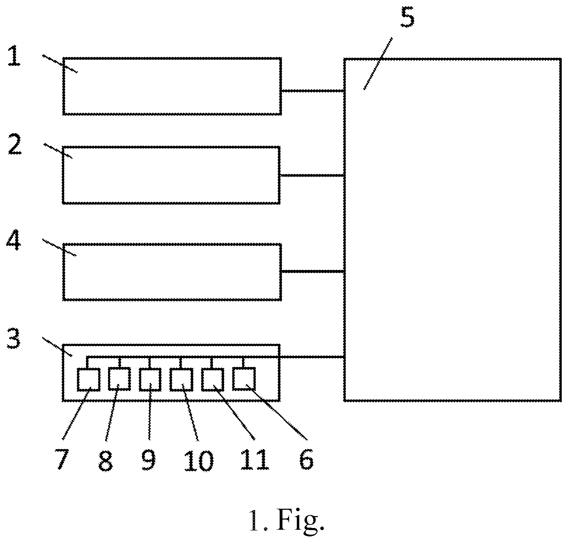

To demonstrate a typical form of application in a vehicle, Figure 1 shows the control system 5, the power supply 1, the environment sensors 2, and the executive components 3, that are the brake system 7, the engine 8, the cruise control 9, the steering system 10, the transmission system 11, and the interface 6.

Power is supplied to the control system 5 by the power supply 1. The environment sensors 2 are connected to the control system 5 through a communication channel, for example a CAN bus, and they provide measured/calculated information on objects that are in the vicinity of the vehicle (e.g. longitudinal and lateral distance, speed). The executive components 3 are also connected to the control system 5 through a communication channel, and they provide information on the state of the vehicle (e.g. speed of the own vehicle) and they can receive commands from the control system 5, such as a braking request for the brake system 7, a torque request for the engine 8 etc. Together with the interfaces 6 that are available in the vehicle by default (e.g. indicator, windscreen-wiper switch, dashboard etc.) and system-specific warning device 4 provides control input that is necessary for the control system 5 (e.g. function on/off switch), and it can execute warnings (e.g. visual, audible etc.) that serve as output of the control system 5.

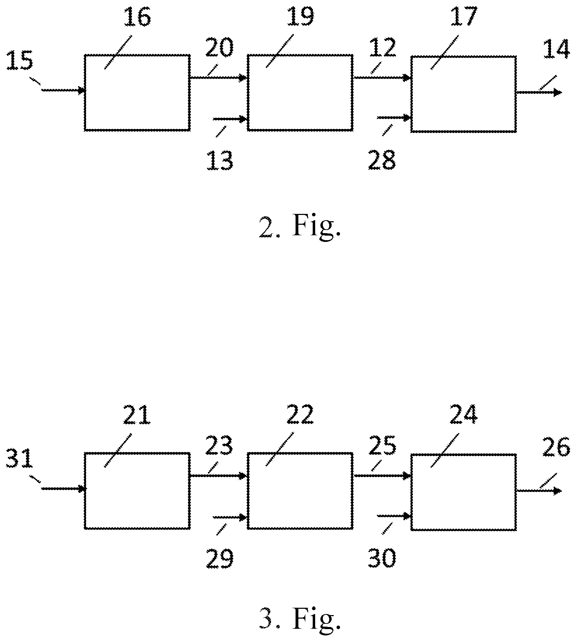

Figure 2 shows the process of determining a command to permit the initiation of an emergency braking or a warning operation. The dynamic tracker 19 for critical states is connected through the critical values of non-measurable states 20 to the static predictor for intervention cascade 16, which is fed by the input to the static predictor for intervention cascade 15. The critical values of measurable states 12 is fed to the comparator algorithm 17, which is fitted with an output from comparator algorithm 14. Finally, critical distance and/or speed values are compared to the corresponding instantaneous (currently measured) values in order to decide on initiating a necessary intervention. Figure 2 shows the additional input 13 to the dynamic tracker and the additional input 28 to the comparator algorithm.

An important feature of the process is that does not use actual object acceleration information, while it is able to intervene with an appropriate level of safety in situations where the object in front of the own vehicle accelerates or decelerates considerably. The static predictor for intervention cascade 16 calculates the critical values of non-measurable states 20 on the basis of available data; in the present situation, it calculates the critical acceleration value for the object in front of the vehicle, and if that value is met, as calculated from the actually measured data of the other kinematic quantities (distance, speed of own and forward vehicle, own vehicle acceleration), it initiates emergency braking and preliminary warning. If we assume, without any restriction on generality, that a single warning phase is applied, and, with a view to avoiding collision, we set as goals in this example to have the speed of the own vehicle match the speed of the object at the end of the intervention, and to have the distance between the own vehicle and the object match a pre-set distance at the end of the intervention, and we assume constant acceleration, then the two following equations may be formulated:

$$v_{ego,I} + a_{ego,I} \cdot t_{warn} + a_{ego,interven} \cdot t_{interven} = v_{obj,I} + a_{obj,I} \cdot (t_{warn} + t_{interven})$$

$$v_{ego,I} \cdot (t_{warn} + t_{interven}) + \tfrac{1}{2}\, a_{ego,I} \cdot t_{warn}^2 + \tfrac{1}{2}\, a_{ego,interven} \cdot t_{interven}^2 + a_{ego,I} \cdot t_{warn} \cdot t_{interven} =$$

$$d_{rel,I} + v_{obj,I} \cdot (t_{warn} + t_{interven}) - \tfrac{1}{2}\, a_{obj,I} \cdot (t_{warn} + t_{interven})^2 - d_{rel,desired}$$

where:

| Label | Meaning |
|---|---|
| $d_{rel,I}$ | the initial relative distance of the object relative to the own vehicle |
| $v_{ego,I}$ | initial speed of own vehicle |
| $v_{obj,I}$ | initial speed of the object |
| $a_{ego,I}$ | initial acceleration of own vehicle |
| $a_{obj,I}$ | initial acceleration of the object |

(continued)

| Label | Meaning |
|---|---|
| $a_{ego,interven}$ | the desired acceleration of the own vehicle during the intervention (emergency braking) |
| | $t_{warn}$ warning phase length |
| $t_{interven}$ | intervention (emergency braking) phase length |
| $d_{rel,desired}$ | safety distance (desired distance) between the object and the own vehicle at the end of the intervention |

For the application of the equations, the environment sensors and, on the basis of system parameters, the input to the static predictor for intervention cascade 15 provide the following values: $d_{rel,I}$, $V_{ego,I}$, $V_{obj,I}$, $a_{ego,I}$, $a_{ego,interven}$, $t_{warn}$, $d_{rel,desired}$. (Note that the data may also be available in other coordinate systems or other formats.) As described above, if there is a solution that meets the conditions, the set of equations can be used to calculate a hypothetical $a_{obj,I}$ value, meaning that the critical object acceleration can be calculated. Critical object acceleration, as the critical values of non-measurable states 20, and the additional input 13 to the dynamic tracker provide the information required by the dynamic tracker 19 for critical states, which is also equipped with memory (thus dynamic as opposed to static), so it can store and use the data measured or calculated in the current processing cycle as well as the corresponding previous values for the purpose of determining the critical values of measurable states 12, i.e. in this situation, the critical speed and/or distance values relating to the object. This makes it possible to define "dangerous" where "safe" zones within the speed and distance ranges, and such zones are separated by the critical values. For the purpose of making such determinations, the additional input 13 to the dynamic tracker can provide both the speed and acceleration values for the own vehicle and the distance and speed values for the object. As a final step in the process, in addition to the critical values of measurable states 12, information is also provided to the comparator algorithm 17 by the additional input 28 to the comparator algorithm, and it decides based on the relationship of such inputs whether or not to initiate a warning / emergency braking operation, and it signals this as the output from comparator algorithm 14. (The additional input 28 to the comparator algorithm contains the measured values of the measurable states (current distance and speed of the object), which can be directly compared to the input to comparator algorithm).

It should be noted that the equations concerning the operation of the static predictor for intervention cascade 16 serve only as examples, and other considerations known to those skilled in the art may be needed to deal with certain situations effectively. However, it should be emphasized again that the actual acceleration of the object is not required during the process outlined in Figure 2 (critical acceleration is merely a hypothetical value).

Figure 3 demonstrates the process of calculating the continuous vehicle control intervention signal (e.g. acceleration command). Figure 3 shows the input to static manoeuvre predictor 31 and the static manoeuvre predictor 21. The next item of the flowchart is the dynamic tracker for ideal states 22, the input of which is the additional input 29 for dynamic tracker for ideal states and the ideal values of non-measurable states 23; its output in this scenario is the input of the control protocol unit 24, i.e. the ideal values of measurable states 25. An additional input to the control protocol unit 24 is the additional input 30 to the control protocol unit, and its output is the output from control protocol unit 26.

The demonstrated continuous vehicle control can be used during emergency braking, and also during comfort deceleration or even comfort acceleration. One example of its use as a convenience function is the ACC function, which implements the continuous following of another vehicle in front of the vehicle; in other and simpler words, it maintains a certain distance. An important feature of the vehicle control process described herein is that it does not use actual object acceleration information, but it is capable of intervening with adequate comfort and safety level even in situations where the object in front of the own vehicle accelerates or decelerates significantly. The procedure is very similar to the one shown in Figure 2, if the hypothetical acceleration of the object is interpreted not as a critical acceleration but as its ideal acceleration. The task of the static manoeuvre predictor 21 is to calculate, on the basis of the available data, the ideal values of non-measurable states 23, in this case the ideal acceleration value for the object in front of the vehicle (if that value is met, as calculated on the basis of actually measured data on the other kinematic quantities (distance, speed of own vehicle and of the vehicle in front, acceleration of own vehicle), the desired acceleration of the own vehicle should not be changed). Depending on the type of manoeuvre and the desired behaviour, the static manoeuvre predictor 21 may use different methods to produce its output; in some situations, the equations formulated in connection with Figure 2 may also give a satisfactory result. On the basis of environment sensors and system parameters, the input to static manoeuvre predictor 31 provides the following values: $d_{rel,I}$, $V_{ego,I}$, $V_{onj,I}$, $a_{ego,I}$, $a_{ego,interven}$, $d_{rel,desired}$, where the labels bear the meaning specified above, with the proviso that the labels $a_{ego,interven}$ and $d_{rel,desired}$ may be understood for any manoeuvre, not only for emergency braking. Unlike in the example described in relation to Figure 2, $t_{warn}$ is not included in the list, as a warning phase does not need to be taken into consideration in the context of a continuous intervention. Based on the above, a hypothetical $a_{obj,I}$ can be calculated, meaning that the ideal acceleration of the object can be determined. The ideal object acceleration, as the ideal values of non-measurable states 23, and the additional input 29 for dynamic tracker for ideal states provide the information required by the dynamic tracker for ideal states 22, which is fitted with memory (hence dynamic as opposed to static), so that it is able to store and use data measured or calculated in the current processing cycle, as well as the corresponding earlier values, in order to determine ideal values of measurable states 25, which are, in this scenario, the ideal speed and/or distance values relating to the object. For the purpose of making such determinations, the additional input 29 to the dynamic tracker for ideal states can provide both the speed and acceleration values for the own vehicle and the distance and speed values for the object. As a final step in the process, the ideal values of measurable states 25 and the additional input 30 to the control protocol unit provide information to the control protocol unit 24, which calculates the signal required for continuous intervention (e.g. the current acceleration command of the own vehicle) based on the relationship between the inputs and indicates it as the output from control protocol unit 26. The additional input 30 to the control protocol unit contains the measured values of the measurable states (current distance and speed of the object), which can be directly compared with the ideal values of the measurable states. Under ideal conditions and provided that the situation develops in real life exactly the same way as predicted, the calculated ideal distance and speed values of the object must match the actual distance and speed values of the object, and the intervention signal for continuous intervention may match the desired value in such a situation. However, if the real situation deviates from the prediction, the calculated ideal distance and speed values of the object deviate from the actual distance and speed values of the object, and, in such a situation, the intervention signal for continuous intervention needs to be adapted according to the given situation and the size and sign of any difference.

One possible expression for calculating the intervention signal of a continuous intervention (the current acceleration command in this scenario) in general form:

$$a_{ego,req} = f(d_{obj,M},\ v_{obj,M},\ d_{obj,ideal},\ v_{obj,ideal},\ \dots)$$

where:

| Label | Meaning |
|---|---|
| $d_{obj,M}$ | the current distance of the object relative to the own vehicle |
| $V_{obj},M$ | current speed of the object ect |
| $d_{obj,ideal}$ | ideal distance of the object from the own vehicle |
| $v_{obj,ideal}$ | ideal speed of the object |
| $a_{ego,req}$ | acceleration command of the own vehicle |

A possible implementation of the function $f(\cdot)$ and, as a consequence, the above expression with $k_1$ and $k_2$ control parameters, which may be obtained, for example, by parameter tuning:

$$a_{ego,req} = a_{ego,interven} + k_1 \cdot (d_{obj,M} - d_{obj,ideal}) + k_2 \cdot (v_{obj,M} - v_{obj,ideal})$$

where $a_{ego,interven}$ is the desired acceleration of the own vehicle during the intervention, as explained above.

Note that the above expressions are only examples, and the control may also be implemented using another algorithm. It should also be noted that not only the output from control protocol unit 26 may be used as acceleration value; such a value may also be, for example, the desired speed, the jerk (i.e. the derivative of acceleration over time), the thrust or torque exerted by the motor or engine etc., or even a binary true-false signal, which is also shown in Figure 2 in connection with the initiation of a warning and/or emergency braking. In this way, it can be concluded that the example shown in Figure 3 is more general than the one presented in Figure 2, and it can be used to initiate alarm and emergency braking processes in addition to calculating the control signal for continuous intervention.

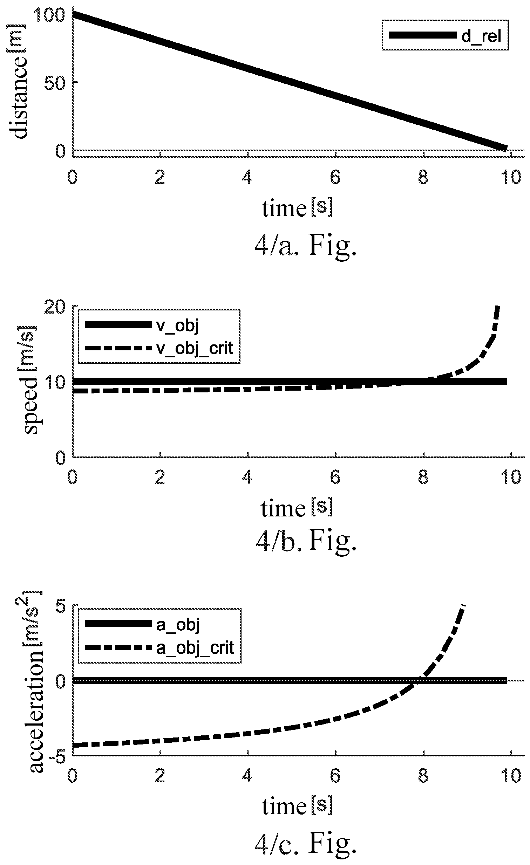

The diagrams of Figures 4a, 4b, and 4c demonstrate a manoeuvre as an example, where another vehicle moves ahead of the own vehicle, along the same line, and an automatic emergency braking manoeuvre needs to be initiated. The labels on the figures bear the following meaning: d_rel means the current distance between the own vehicle and the vehicle ahead, v_obj means the speed of the vehicle ahead (relative to ground), a_obj means the acceleration of the vehicle ahead (relative to ground), and v_obj_crit and a_obj_crit mean the critical speed and acceleration values calculated for the vehicle in front, respectively. Figures 4a, 4b, and 4c show graphs relating to the same manoeuvre.

Let us assume that the speed of the own vehicle is 20 m/s, and the vehicle in front moves at a constant speed of 10 m/s, and the initial distance between them is 100 m. Unless the driver intervenes, this situation will become critical at one point, and the system will have to initiate a warning or even braking, as the own vehicle will approach the vehicle in front of it due to the speed difference. However, the exact time of that happening depends not only on the current distance and speed values, but also on the changes of such values; if the vehicle in front begins to brake, the own vehicle will catch up earlier, but if it begins to accelerate, the second vehicle will catch up only later or, depending on the degree of acceleration, not at all. It follows from this that there is a critical acceleration value for the vehicle in front the system must give a warning about; in other words, the critical value divides the acceleration range into "safe" and "dangerous" zones. Figure 4c shows that, in this example, that the acceleration of the vehicle moves from the "safe" zone into the "dangerous" zone at 8 s, when a_obj = a_obj_crit, so the system must give a warning at this time.

It is essential for the invention that the intersection shown in Figure 4c cannot be determined directly if commonly used sensors are applied, as such sensors are not able to measure the acceleration of the object. This is where the dynamic tracking described in this invention becomes significant: based on the critical acceleration value (which is a hypothetical value) and using other measured kinematic quantities, the critical speed and critical distance values can be calculated, which also divide the speed and distance range into "safe" and "dangerous" zones. Based on the speed and distance values that can also be measured using common sensors, it can be determined whether they fall into the "safe" or "dangerous" zones, and the system can decide on the intervention depending on this determination. In Figure 4b, the described critical speed values (obtained with the help of the dynamic tracker) and the current object speed is indicated; the system must initiate the intervention when these values intersect around 8 s.

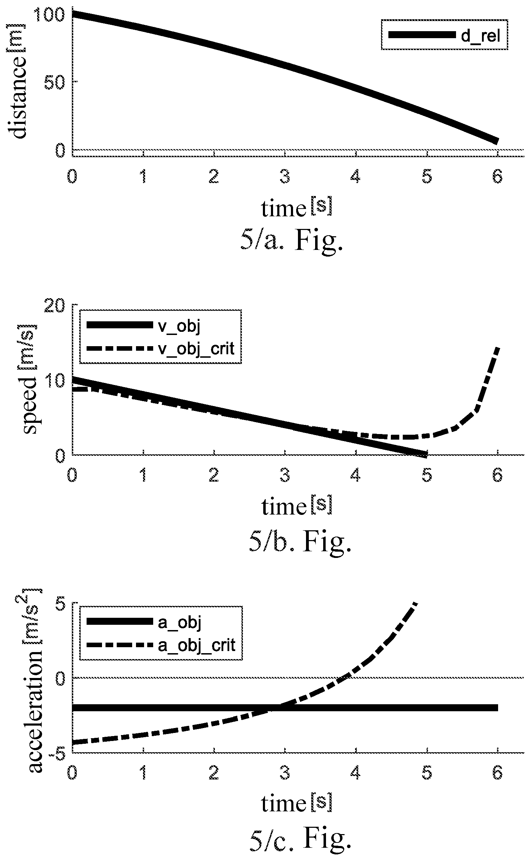

Similarly to Figures 4a, 4b, and 4c, Figures 5a, 5b, and 5c also illustrate the behaviour of a procedure as an example, with the difference that, in this example, the vehicle in front accelerates at a rate of -2 m/s$^2$ (i.e. it is slowing down). The labels on the drawings are exactly the same as those used on Figures 4a, 4b, 4c. As seen on this example, the a_obj_crit = a_obj intersection and the v_obj_crit = v_obj intersection, calculated using dynamic tracking, occurs significantly earlier than before, already around 3 s, due to the deceleration, and this means that the system must also issue a warning earlier because of the deceleration. This is in line with the essential objective of the invention, i.e. to have the intervention initiated at an appropriate time even if the speed is not constant.

The solution according to the invention has several advantages. Since the assumed constant speed does not exist under most real conditions, ignoring the acceleration of the object that cannot be measured directly by environmental sensors may lead to a decrease in system performance. The solution according to the invention is able to provide effective driving support and to avoid a linear longitudinal collision in a simple manner, for example by using radar and/or a camera and/or a laser or lidar, without measuring acceleration values but also without ignoring the consequence of accelerations. The solution according to the invention is able to respond to surrounding objects in a timely manner and with an appropriate level of comfort and safety, even if the absolute value of any object acceleration is significant, where the "response" can be a warning to the driver (e.g. light and/or audible warning), a change to the system's behaviour, or continuous adaptation when closed loop control is used.

The invention can be implemented in other forms and with other procedures within the scope of protection defined by the appended claims. The invention can be applied in the automotive industry.

**Claims**

1.    Procedure for timely initiating an automatic emergency braking process of a vehicle and for controlling its longitudinal movement, in order to avoid a collision with an object moving in front and/or continuously follow an object moving in front, using radar and/or camera and/or lidar, and without using object acceleration data directly, as part of which instantaneous kinematic values are measured and pre-set or adaptively determined relative speed and distance are to be reached or maintained, and if those are predicted to fail, the driver is warned and then an emergency braking process is initiated or interventions are carried out as necessary for following the object, current instantaneous kinematic values are used in conjunction with previously observed kinematic values, the hypothetical kinematic values refer to the current processing cycle, while the previously observed kinematic values refer to at least one previous processing time cycle, an actual warning and/or acceleration command to be executed by the own vehicle is determined based on the relationship between the hypothetical values and the actual, current instantaneous values, **characterized in that**

     - the previously observed kinematic values are used together with the desired acceleration of the vehicle to determine hypothetical kinematic values,
     - the hypothetical kinematic values are determined to correspond to the idealized situation that would have developed taking into account the previously observed kinematic values and the desired acceleration of the vehicle itself.

2.    Connection arrangement configured to timely initiate an automatic emergency braking process of a vehicle and control its longitudinal movement according to claim 1, which includes a power supply (1), environment sensors (2), executive components (3), a warning and operating device (4), a control system (5), interfaces (6), and a static manoeuvre predictor (21), the control system (5) uses intervention signals from a control protocol unit (24) and is connected to operating and warning devices (4) and the executive components (3) in a manner that is suitable for transferring signals, **characterized in that** it includes a dynamic tracker for ideal states (22), which calculates hypothetical values through the static manoeuvre predictor (21).

**Patentansprüche**

1. Verfahren zur rechtzeitigen Einleitung eines automatischen Notbremsvorgangs eines Fahrzeugs und zur Steuerung seiner Längsbewegung, um eine Kollision mit einem vorausfahrenden Objekt zu vermeiden und/oder einem vorausfahrenden Objekt kontinuierlich zu folgen, unter Verwendung von Radar und/oder Kamera und/oder Lidar, und ohne direkte Verwendung von Objektbeschleunigungsdaten, wobei momentane kinematische Werte gemessen werden und voreingestellte oder adaptiv bestimmte Relativgeschwindigkeit und Abstand erreicht oder beibehalten werden sollen, und wenn deren Nichterreichen vorhergesagt wird, der Fahrer gewarnt wird und dann ein Notbremsvorgang eingeleitet wird oder Eingriffe zur Objektfolge nach Bedarf durchgeführt werden, aktuelle momentane kinematische Werte in Verbindung mit zuvor beobachteten kinematischen Werten verwendet werden, die hypothetischen kinematischen Werte sich auf den aktuellen Verarbeitungszyklus beziehen, während sich die zuvor beobachteten kinematischen Werte auf mindestens einen vorherigen Verarbeitungszeitzyklus beziehen, ein tatsächlicher Warn- und/oder Beschleunigungsbefehl, der vom eigenen Fahrzeug auszuführen ist, basierend auf der Beziehung zwischen den hypothetischen Werten und den tatsächlichen, aktuellen momentanen Werten bestimmt wird, **dadurch gekennzeichnet, dass**

   - die zuvor beobachteten kinematischen Werte zusammen mit der gewünschten Beschleunigung des Fahrzeugs verwendet werden, um hypothetische kinematische Werte zu bestimmen,
   - die hypothetischen kinematischen Werte so bestimmt werden, dass sie der idealisierten Situation entsprechen, die sich unter Berücksichtigung der zuvor beobachteten kinematischen Werte und der gewünschten Beschleunigung des eigenen Fahrzeugs entwickelt hätte.

2. Verbindungsanordnung, die konfiguriert ist, um

   rechtzeitig einen automatischen Notbremsvorgang
   eines Fahrzeugs einzuleiten
   und seine Längsbewegung gemäß Anspruch 1 zu steuern, die eine Stromversorgung (1), Umgebungssensoren (2), Ausführungskomponenten (3), eine Warn- und Bedienvorrichtung (4), ein Steuerungssystem (5), Schnittstellen (6) und einen statischen Manöverprädiktor (21) umfasst, wobei das Steuerungssystem (5) Eingriffssignale von einer Steuerprotokolleinheit (24) verwendet und mit Bedien- und Warnvorrichtungen (4) und den Ausführungskomponenten (3) in einer für die Signalübertragung geeigneten Weise verbunden ist, **dadurch gekennzeichnet, dass** sie einen dynamischen Tracker für Idealzustände (22) umfasst, der hypothetische Werte durch den statischen Manöverprädiktor (21) berechnet.

**Revendications**

1. Procédé pour initier en temps opportun un processus de freinage d'urgence automatique d'un véhicule et pour contrôler son mouvement longitudinal, afin d'éviter une collision avec un objet se déplaçant devant et/ou suivre continuellement un objet se déplaçant devant, en utilisant un radar et/ou une caméra et/ou un lidar, et sans utiliser directement les données d'accélération de l'objet, dans le cadre duquel des valeurs cinématiques instantanées sont mesurées et une vitesse relative et une distance prédéfinies ou déterminées de manière adaptative doivent être atteintes ou maintenues, et si celles-ci sont prédites comme devant échouer, le conducteur est averti puis un processus de freinage d'urgence est initié ou des interventions sont effectuées selon les besoins pour suivre l'objet, les valeurs cinématiques instantanées actuelles sont utilisées conjointement avec les valeurs cinématiques observées précédemment, les valeurs cinématiques hypothétiques se réfèrent au cycle de traitement actuel, tandis que les valeurs cinématiques observées précédemment se réfèrent à au moins un cycle temporel de traitement précédent, un avertissement réel et/ou une commande d'accélération à exécuter par le véhicule propre est déterminé sur la base de la relation entre les valeurs hypothétiques et les valeurs instantanées actuelles réelles, **caractérisé en ce que**

   - les valeurs cinématiques observées précédemment sont utilisées conjointement avec l'accélération souhaitée du véhicule pour déterminer des valeurs cinématiques hypothétiques,
- les valeurs cinématiques hypothétiques sont déterminées pour correspondre à la situation idéalisée qui se serait développée en tenant compte des valeurs cinématiques observées précédemment et de l'accélération souhaitée du véhicule lui-même.

2. Agencement de connexion configuré pour initier en

    temps opportun un processus de freinage d'urgence
    automatique d'un véhicule

et contrôler son mouvement longitudinal selon la revendication 1, qui comprend une alimentation électrique (1), des capteurs d'environnement (2), des composants exécutifs (3), un dispositif d'avertissement et de fonctionnement (4), un système de contrôle (5), des interfaces (6), et un prédicteur de manoeuvre statique (21), le système de contrôle (5) utilise des signaux d'intervention d'une unité de protocole de contrôle (24) et est connecté aux dispositifs de fonctionnement et d'avertissement (4) et aux composants exécutifs (3) d'une manière appropriée pour transférer des signaux, **caractérisé en ce qu'il** comprend un suiveur dynamique pour les états idéaux (22), qui calcule des valeurs hypothétiques par l'intermédiaire du prédicteur de manoeuvre statique (21).

1. Fig.

2. Fig.

3. Fig.

4/a. Fig.

4/b. Fig.

4/c. Fig.

5/a. Fig.

5/b. Fig.

5/c. Fig.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7425043 B2
- EP 1539523 B1
- US 6470986 B2
- US 20090210114 A1
- DE 10102772 A1
- US 20090024282 A1
- CN 107139923 B
- US 2011190972 A1